# EUROPEAN PATENT SPECIFICATION

(11) **EP 2 109 371 B1**
(45) Date of publication and mention of the grant of the patent: **17.10.2012**
(21) Application number: 07760834.7
(22) Date of filing: 18.04.2007
(51) Int. Cl.: A23L 2/56, A23D 7/01, A23L 1/035, A23L 1/222, A23L 1/48

(54) **PROCESS FOR SOLUBILIZATION OF FLAVOR OILS**
VERFAHREN FÜR DIE SOLUBILISIERUNG VON AROMAÖLEN
PROCÉDÉ DE SOLUBILISATION D'HUILES AROMATISANTES

(30) Priority: 25.09.2006 US 826766 P; 04.10.2006 US 828205 P
(43) Date of publication of application: 21.10.2009
(73) Proprietor: COMSTOCK, Bob, Singapore 266925 (SG)
(72) Inventor: WANG, Mei Yin, Singapore 530363 (SG); LIM, Nelly, Singapore 127146 (SG)
(74) Representative: Fiener, Josef
(86) International application number: PCT/US2007/066861
(87) International publication number: WO 2008/039564

(56) References cited:
- EP-A- 0 925 727
- EP-A- 1 149 845
- WO-A-01/93703
- JP-A- 2001 333 703
- US-B1- 6 576 285
- TAHERIAN ET AL: "Effect of added oil and modified starch on rheological properties, droplet size distribution, opacity and stability of beverage cloud emulsions" JOURNAL OF FOOD ENGINEERING, BARKING, ESSEX, GB, vol. 77, no. 3, December 2006 (2006-12), pages 687-696, XP005516124 ISSN: 0260-8774

## Description

### Background of the Invention

### Area of the Art

This invention relates to a process that solubilizes essential oils to produce clear beverages.

### Background

Many flavoring agents in beverage preparation are essential oils that are generally water insoluble. The common flavors such as orange, lemon and grapefruit have limited solubility in water. However, these flavors are well received by the consumers due to desirable aroma and flavor, particularly in beverages.

There are several industrial practices to introduce these oils into water. A major technique is to wash/extract the essential oil with a water-miscible solvent to remove the bulk of water insoluble components. In this washing process, the water soluble or polar components of the oil are extracted and this extract can be used to create clear beverages. However, this process does not preserve the full aroma and flavor of the essential oil, and the "freshness" of flavors such as those provided by citrus oils is reduced. Another common technique used is to formulate the essential oils into microemulsions. These microemulsions comprise about 30% essential oil, 20-50% surfactant with the remainder being food grade solvent such as glycerol, propylene glycol, ethanol or even water. Most of these microemulsions also contain ethoxylated surfactants like polysorbates. The use of polysorbates presents taste as well as regulatory issues. Although microemulsions form spontaneously, the relative amounts of oil, surfactants and solvents are crucial to their formation. Because the composition of a given flavor oil depends on its origin and processing, microemulsions have to be tailored to cater to oil differences. In addition, solid flavor delivery systems have also been developed that allows the dispersion of flavor in beverages. In these systems, hydrocolloids and/or starches are used as carriers. A draw back of these systems is that the flavor loading is limited. For example, U.S. Pat No. 4,707,367 (Miller et al.) discloses a system where the solids contain an average of only 20% by weight flavor.

With the gaining popularity of functional drinks, nutraceuticals such as Coenzyme Q10, omega-3 fatty acids, vitamins and carotenoids are supplemented in beverages. Many of these nutraceuticals are lipophilic in nature and possess limited water volubility. If the targeted end product is a clear beverage, these nutraceuticals have to be formulated into a water-soluble form before introduction into the beverage.

US-B-6,576,285 uses gums and modified starches as emulsifiers to produce a stable beverage containing significant quantities of water immiscible plant sterols and stanols. A pre-beverage emulsion is made from an aqueous phase containing the gums and starches and an oil phase formed by mixing the sterol/stanols with other oils and heating to dissolve. The two heated phases are homogenized together to create an oil in water emulsion where the oil particles are below 5 micrometers diameter and preferably below 1 micrometer diameter. This emulsion is mixed into aqueous beverage ingredients to create a cholesterol lowering beverage. The transparency of the resulting beverage is not specified.

EP-A-0 925 727 discloses an emulsifier extracted from citrus seeds or grape seeds to produce a stable beverage. The emulsifier is prepared from defatted seeds and is used to emulsify flavor oil producing a beverage wherein the mean volume diameter of the oil particles is 0.85 micrometer. The reference states that the emulsion concentrate preferably imparts a cloudy appearance to the beverage.

JP-2001/333703 uses an antibiotic sucrose ester mixed with a polyglycerol (glycol) surfactant as an emulsifier to produce stable beverages having a transparency ranging from 10% to more than 50%. The reference teaches that the sucrose ester glycol surfactant mixture should have a cloud point above 35 °C.

### Description of the Invention

The following description is provided to enable any person skilled in the art to make and use the invention as defined in claim 1, and sets forth the best modes contemplated by the inventor of carrying out the invention. Various modifications, however, will remain readily apparent to those skilled in the art, since the general principles of the present invention have been defined herein specifically to provide an improved process for solubilization of flavor oils.

The improved process for incorporating flavor oils into clear beverages uses a high pressure homogeniser along with high hydrophilic-lipophilic balance (HLB) emulsifiers to solubilize flavor oils allowing brighter, fresher beverages without washing/extraction or necessary inclusion of cosolvents as is common in the industry. Besides resulting in superior oil solubilization, this process also reduces the amount of emulsifier required to solubilize an oil.

In the process, a single emulsifier or a blend of emulsifiers can be used to achieve optically clear beverages flavored with single fold oils especially citrus flavors such as orange, lemon and lime. Besides single fold oil, this technology also works for flavor bases that comprise mixtures of natural flavor oils and synthetic flavorings.

This process also allows the addition of tocopherol, butylated hydroxyanisole, butylated hydroxytoluene, rosemary oil or other lipophilic substances to the flavor oil for stabilization. Depending on the oil, common weighting agents such as sucrose acetate isobutyrate, brominated vegetable oil and xanthan gum can also be added to the oil to enhance emulsion stability in the concentrate or beverage.

The first step of the process includes dissolving the emulsifier in water. A combination of solvents, such as propylene glycol, glycerol, benzyl alcohol, triacetin, ethanol and isopropanol, and water may also be used to dissolve the emulsifier. We have discovered that besides the use of cosolvents improved results can be obtained by adding sugars (saccharides) and/or sugar alcohols to the aqueous emulsifier mixture. Emulsifiers can also be dry mixed with sucrose and then dissolved. Depending on the emulsifier/emulsifier system used, heat may be applied to facilitate dissolution. In the next step flavor oil is added to the emulsifier solution and a crude emulsion is generated with high shear mixing. The crude emulsion is fed into a two stage homogenizer and subjected to several cycles of homogenization. The homogenization protocol depends on the flavor oil used. Typically, three cycles at 400bar is adequate. After homogenization, the emulsion concentrate is diluted to the desired flavor loading In the beverage. Depending on the beverage nature, the beverages may be subjected to pasteurization. Following pasteurization, a clear solution is obtained. For beverages that do not undergo pasteurization, the clarity of the beverage is dependent on the terpene content of the flavor oil. A clear beverage can be obtained if the terpene content of the flavor is less than 75%. Pasteurization serves not only to help clarify the beverage but to sterilize it to prevent spoilage due to growth of microorganisms. Besides pasteurization, filtration and ozonation can also be used to sterilize the beverage.

Sucrose monoesters on their own were found to be excellent emulsifiers for the inventive process. Clear beverages can be obtained when only sucrose esters are employed as emulsifiers. The composition of flavor oils is highly dependent on its origin, species and processing history. Furthermore, blending of oils is common so as to achieve a particular flavor profile. Thus this solubilization process should also be robust as to cater to differences in flavor oils. Due to diversity in the range of sucrose esters in terms of fatty acid chain length and degree of esterification, adjustments in the sucrose ester blend has been found to provide a quick way of customization to different oils and

The ratio of flavor oil to emulsifier loading varies with the type of flavor oil used. For an orange flavor base with a terpene content of 75%, the ratio is 2:1 when sucrose monopalmitate is used. At this stage, a nutraceutical may be added together with flavor oil. If the nutraceutical has limited water solubility, the emulsifier loading may be increased to accommodate the increase in oil load so that a clear beverages is still obtained.

The effect of emulsifier and flavor on the loading ratios will be illustrated in the examples. However, adjustment of this ratio may be necessary to achieve clarity depending on the flavor oil or oils or emulsifier used.

In the emulsion concentrate the flavor oil is typically present at a concentration of 3% while the sucrose monopalmitate is present at a concentration of 1.5%. This translates to a flavor oil concentration in the final beverage between 25 and 100 ppm and a sucrose monopalmitate concentration of between 12.5 and 50 ppm.

Depending on the nature of flavor oil, clear beverages may not be obtained after dilution of the flavor concentrate. In such cases, pasteurization was found to ensure the clarity of the beverages. In cases where pasteurization is not permitted, the homogenization protocol can be adjusted to render the beverage clear.

The flavor concentrate obtained after homogenization may be stored for later dilution. Storage can involve the addition of thickeners and stabilizers. Another alternative is to dry the concentrate into a powder. Examples of possible drying techniques are spray drying and freeze drying. Finally, the emulsion concentrate is diluted into the beverage to achieve the desired flavor loading and pasteurized. The pasteurization step clarifies the mixture so that a clear solution is obtained.

### Example 1

This example illustrates the formation of a beverage flavored with an orange flavor base. The emulsifier used was sucrose monopalmitate with monoester content greater than 90%.

| **Step** | **Actions** |
|---|---|
| 1) Dry mix | Dry mix 200g sucrose and 7.5g sucrose monopalmitate |
| 2) Solvent mix | Mix 75g of propylene glycol and 202.25g of water. Heat the mixture to 40°C to facilitate subsequent dissolution of sucrose and sucrose ester. |
| 3) Sucrose/sucrose ester dissolution | Add the dry mix of sucrose and sucrose ester slowly into the solvent mix using high shear mixer (Silverson L4R). |
| 4) Oil addition | Add 15g of orange flavor base to the mixture from step 3 with |
| | high shear for 10min (Silverson L4R) |
| 3) Homogenization | Homogenize the emulsion at 400 bar for 3 cycles through a APV1000 homogenizer. The concentrate solution will be less cloudy after homogenization. |
| 4) Addition of flavor to beverage | The resultant flavor concentrate is then dosed at 0.167% into 12brix sugar solution to yield an orange flavored beverage that contains 50ppm orange oil. Citric acid is added such that the citric add loading in beverage is 0.1%. The resultant beverage clarity is around 3 FTU (formazine turbiditv units). |
| 5) Pasteurization | The beverage is then pasteurized at 85°C for 15min. The resultant beverage will register an FTU readinq less than 2. |

### Example 2

This example illustrates the formation of a beverage flavored with a lemon flavor base that contains less than 75% terpenes. The emulsifier used was 100% sucrose monopalmitate (monoester content greater than 90%).

| **Step** | **Actions** |
|---|---|
| 1) Dry mix | Dry mix 200g sucrose and 7.5g sucrose monopalmitate |
| 2) Solvent mix | Mix 75g of propylene glycol and 202.25g of water. Heat the mixture to 40°C to facilitate subsequent dissolution of sucrose and sucrose ester. |
| 3) Sucrose/sucrose ester dissolution | Add the dry mix of sucrose and sucrose ester slowly into the solvent mix using high shear mixer (Silverson L4R) |
| 4) Oil addition | Add 15g of lemon flavor base to the mixture from step 3 with high shear for 10min (Silverson L4R) |
| 3) Homogenization | Homogenize the emulsion at 400 bar for 3 cycles through a APV1000 homogenizer. The concentrate solution will be less cloudy after homogenization. |
| 4) Addition of flavor to beverage | The resultant flavor concentrate is then dosed at 0.167% into 12brix sugar solution to yield an orange flavored beverage that contains 50ppm orange oil. Citric acid is added such that the citric acid loading in beverage is 0.1%. The resultant beverage clarity is around 3 FTU. |
| 5) Pasteurization | The beverage is then pasteurized at 85°C for 15min. The resultant beverage will register an FTU readinq less than 2. |

### Example 3

This example shows the use of sucrose monolaurate.

| **Step** | **Actions** |
|---|---|
| 1) Dry mix | Dry mix 200g sucrose and 7.5g sucrose monolaurate |
| 2) Solvent mix | Mix 75g of propylene glycol and 202.25g of water. Heat the mixture to 40°C to facilitate subsequent dissolution of sucrose and sucrose ester. |
| 3) Sucrose/sucrose ester dissolution | Add the dry mix of sucrose and sucrose ester slowly into the solvent mix using high shear mixer (Silverson L4R) |
| 4) Oil addition | Add 15g of grapefruit base to the mixture from step 3 with high shear for 10min (Silverson L4R) |
| 3) Homogenization | Homogenize the emulsion at 400 bar for 3 cycles through a APV1000 homogenizer. The concentrate solution will be less cloudy after homogenization, but will remain unclear. |
| 4) Addition of flavor to beverage | The resultant flavor concentrate is then dosed at 0.167% into 12brix sugar solution to yield an orange flavored beverage that contains 50ppm orange oil. Citric acid is added such that the citric acid loading in beverage is 0.1%. |
| 5) Pasteurization | The beverage is then pasteurized at 85°C for 15min. The resultant beverage will register an FTU reading less than 2. |

The process is effective with any flavor oil/essential oil including orange oil, lemon oil, clove oil, cinnamon oil, mint oil, banana oil and other such oils well known in the art. In addition a variety of water insoluble, primarily lipophilic, nutraceutical and vitamins can be included in the emulsion concentrate. Tocopherol (vitamin E), carotenoids (beta carotene, other carotenes and xanthophylls) and vitamin D can be readily included in beverages by use of the present invention.

## Claims

1. A process for solubilizing flavor oils to produce clear beverages comprising the steps of:
mixing flavor oil into an aqueous solution of emulsifier containing at least one sucrose ester with a high shear mixer to form a crude emulsion;
homogenizing the crude emulsion to form a flavor concentrate; and
diluting the flavor concentrate into a beverage.

2. The process according to claim 1 further comprising a step of dry mixing sucrose with sucrose ester prior to the step of mixing.

3. The process according to claim 1 further comprising the step of pasteurising the beverage to clarify it.

4. The process according to claim 1, wherein the emulsifier comprises a mixture of emulsifiers.

5. The process according to claim 1, wherein the flavor concentrate is stored after the step of homogenizing and prior to the step of diluting.

6. The process according to claim 5, wherein storing the flavor concentrate further comprises adding thickeners and/or stabilizers or drying the flavor concentrate to form a powder.

7. The process according to claim 1, wherein the amount of emulsifier in the crude emulsion ranges from 0.1 to 30% weight by volume.

8. The process according to claim 1, wherein the aqueous solution further contains one or more water miscible solvents selected from the group consisting of propylene glycol, glycerol, benzyl alcohol, triacetin, ethanol and isopropanol or further contains saccharides and/or sugar alcohols selected from the group consisting of sucrose, fructose, glucose, sorbitol, xylitol, mannitol, glycerol and mixtures thereof.

9. The process according to claim 1, wherein the flavor oil in the crude emulsion ranges from 0.2 to 30% weight by volume.

10. The process according to claim 1, wherein the beverage contains 0.005 to 0.02% weight by weight flavor oil or wherein the pH of the beverage ranges from 2 to 8.

11. The process according to claim 1, wherein the flavor oil is selected from the group consisting of lemon, berry, orange, grapefruit, tangerine, lime, kumquat, mandarin, bergamot and mixtures thereof or wherein the flavor oil also contains synthetic flavorings.

12. The process according to claim 1, wherein the flavor concentrate contains a lipophilic antioxidant selected from the group consisting of tocopherol, butylated hydroxyanisole, butylated hydroxytoluene, rosemary oil and mixtures thereof or wherein the flavor concentrate further contains a weighting agent.

13. The process according to claim 12, wherein the weighting agent is selected from the group consisting of sucrose acetate isobutyrate, brominated vegetable oil and xanthan gum, or wherein the flavor concentrate further contains a nutraceutical, in particular selected from the group consisting of coenzyme Q10, omega-3 fatty acids, vitamins and carotenoids.

14. The process according to claim 1, wherein the beverage is sterilized by a process selected from the group consisting of ozonation, filtration and pasteurization.

## Patentansprüche

1. Verfahren zur Solubilisierung von Aromaölen, um klare Getränke herzustellen, umfassend die Schritte:
Mischen von Aromaöl in eine wässrige Lösung eines wenigstens einen Saccharose-Ester enthaltenden Emulgators mit einem Mischer hoher Scherung, um eine Rohemulsion zu bilden;
Homogenisieren der Rohemulsion, um ein Aromakonzentrat zu bilden; und
Verdünnen des Aromakonzentrats zu einem Getränk,

2. Verfahren nach Anspruch 1, ferner umfassend einen Schritt des trockenen Mischens von Saccharose mit Saccharose-Ester vor dem Schritt des Mischens.

3. Verfahren nach Anspruch 1, ferner umfassend einen Schritt des Pasteurisierens des Getränks, um dieses zu klären.

4. Verfahren nach Anspruch 1, wobei der Emulgator eine Mischung von Emulgatoren umfasst.

5. Verfahren nach Anspruch 1, wobei das Aromakonzentrat nach dem Schritt der Homogenisierung und vor dem Schritt des Verdünnens gelagert wird.

6. Verfahren nach Anspruch 5, wobei das Speichern des Aromakonzentrats ferner das Zugeben von Verdickungsmitteln und/oder Stabilisatoren oder das Trocknen des Aromakonzentrats enthält, um ein Pulver zu bilden.

7. Verfahren nach Anspruch 1, wobei die Emulgator-Menge in der Rohemulsion 0,1 bis 30% Gewicht pro Volumen beträgt.

8. Verfahren nach Anspruch 1, wobei die wässrige Lösung weiterhin ein oder mehrere mit Wasser mischbare Lösungsmittel aus der Gruppe, bestehend aus Propylenglykol, Glycerin, Benzylalkohol, Triacetin, Ethanol und isopropanol, enthält oder weiterhin Saccharide und/oder Zuckeralkohole, ausgewählt aus der Gruppe, bestehend aus Saccharose, Fructose, Glucose, Sorbit, Xylit, Mannit, Glycerin und Mischungen davon, enthält.

9. Verfahren nach Anspruch 1, wobei das Aromaöl in der Rohemulsion 0,2 bis 30% Gewicht pro Volumen beträgt.

10. Verfahren nach Anspruch 1, wobei das Getränk 0,005 bis 0,02% Gewicht pro Gewicht Aromaöl enthält oder wobei der pH des Getränks im Bereich von 2 bis 8 ist.

11. Verfahren nach Anspruch 1, wobei das Aromaöl aus der Gruppe, bestehend aus Zitrone, Beere, Orange, Grapefruit, Mandarinen, Limonen, Kumquat, Mandarine, Bergamotte und Mischungen davon ausgewählt ist, oder wobei das Aromaöl auch synthetische Aromastoffe enthält.

12. Verfahren nach Anspruch 1, wobei das Aromakonzentrat eine lipophile Antioxidans aus der Gruppe, bestehend aus Tocopherol, butyliertes Hydroxyanisol, butyliertes Hydroxytoluol, Rosmarinöl und Mischungen davon, enthält oder wobei das Aroma-Konzentrat weiterhin ein Beschwerungsmittel enthält.

13. Verfahren nach Anspruch 12, wobei das Beschwerungsmittel aus der Gruppe, bestehend aus Saccharoseacetatisobutyrat, bromiertes Pflanzenöl und Xanthangummi, ausgewählt ist oder wobei das Aroma-Konzentrat weiterhin ein Nahrungsergänzungsmittel enthält, das insbesondere aus der Gruppe, bestehend aus Co-Enzym Q10, Omega-3 Fettsäuren, Vitamine und Carotinoide, ausgewählt ist.

14. Verfahren nach Anspruch 1, wobei das Getränk durch ein Verfahren, ausgewählt aus der Gruppe, bestehend aus Ozonisierung, Filtration und Pasteurisierung, sterilisiert wird.

## Revendications

1. Procédé de solubilisation d'huiles aromatisantes pour produire des boissons limpides comprenant les étapes ;
de mélange d'une huile aromatisante dans une solution aqueuse d'émulsionnant contenant au moins un ester de saccharose avec un mélangeur à cisaillement élevé pour former une émulsion brute ;
d'homogénéisation de l'émulsion brute pour former un concentré d'arôme ; et
de dilution du concentré d'arôme dans une boisson,

2. Procédé selon la revendication 1 comprenant de plus une étape consistant à mélanger à sec du saccharose avec un ester de saccharose avant l'étape de mélange.

3. Procédé selon la revendication 1 comprenant de plus l'étape de pasteurisation de la boisson pour la clarifier.

4. Procédé selon la revendication 1, dans lequel l'émulsionnant comprend un mélange d'émulsionnants.

5. Procédé selon la revendication 1, dans lequel le concentré d'arôme est stocké après l'étape d'homogénéisation et avant l'étape de dilution.

6. Procédé selon la revendication 5, dans lequel le stockage du concentré d'arôme comprend de plus l'addition d'épaississants et/ou de stabilisants ou le séchage du concentré d'arôme pour former une poudre.

7. Procédé selon la revendication 1, dans lequel la quantité d'émulsionnant dans l'émulsion brute est de 0,1 à 30 % en masse par volume.

8. Procédé selon la revendication 1, dans lequel la solution aqueuse contient de plus un ou plusieurs solvants miscibles à l'eau choisis dans le groupe constitué de propylène glycol, glycérol, alcool benzylique, triacétine, éthanol et isopropanol ou contient de plus des saccharides et/ou des alcools de sucre choisis dans le groupe constitué de saccharose, fructose, glucose, sorbitol, xylitol, mannitol, glycérol et mélanges de ceux-ci.

9. Procédé selon la revendication 1, dans lequel l'huile aromatisante dans l'émulsion brute est de 0,2 à 30 % en masse par volume.

10. Procédé selon la revendication 1, dans lequel la boisson contient de 0,005 à 0,02 % en masse par masse d'huile aromatisante ou dans lequel le pH de la boisson est de 2 à 8.

11. Procédé selon la revendication 1, dans lequel l'huile aromatisante est choisie dans le groupe constitué de citron, baie, orange, pamplemousse, tangerine, lime, kumquat, mandarine, bergamote et mélanges de ceux-ci ou dans lequel l'huile aromatisante contient également des arômes synthétiques.

12. Procédé selon la revendication 1, dans lequel le concentré d'arôme contient un antioxydant lipophile choisi dans le groupe constitué de tocophérol, hydroxyanisole butylé, hydroxytoluène butylé, essence de romarin et mélanges de ceux-ci ou dans lequel le concentré d'arôme contient de plus un agent alourdissant.

13. Procédé selon la revendication 12, dans lequel l'agent alourdissant est choisi dans le groupe constitué d'isobutyrate acétate de saccharose, huile végétale bromée et gomme xanthane, ou dans lequel le concentré d'arôme contient de plus un nutraceutique, choisi en particulier dans le groupe constitué de coenzyme Q10, acides oméga-3 gras, vitamines et caroténoïdes.

14. Procédé selon la revendication 1, dans lequel la boisson est stérilisée par un procédé choisi dans le groupe constitué d'une ozonation, filtration et pasteurisation.
